# EUROPEAN PATENT SPECIFICATION

(11) **EP 1 441 433 B1**
(45) Date of publication and mention of the grant of the patent: **28.06.2006**
(21) Application number: 04001006.8
(22) Date of filing: 19.01.2004
(51) Int. Cl.: H02K 5/22

(54) **Connection assembly, particular for the stator windings of an electric motor**
Verbindungsanordnung, insbesondere für die Statorwicklungen eines Elektromotor
Ensemble de connexion, en particulier pour l'enroulement statorique d'un moteur électrique

(30) Priority: 24.01.2003 IT PD20030013
(43) Date of publication of application: 28.07.2004
(73) Proprietor: INARCA S.p.A., 35010 Vigodarzere PD (IT)
(72) Inventor: Boischio, Ido, 35100 Padova (IT)
(74) Representative: Modiano, Micaela Nadia

(56) References cited:
- EP-A- 0 641 060
- EP-A- 0 837 542
- EP-A- 1 115 191
- DE-C- 4 227 062
- US-A- 4 585 964
- US-A- 5 770 902

## Description

The present invention relates to a connection assembly, particularly for the stator windings of an electric motor.

In particular, the present invention can be applied for example to electric motors for pumps of dishwashers, washing machines or the like.

As is known, one of the critical steps in the process for manufacturing electric motors is the connection of the stator windings to the external electric power supply and to corresponding electronic boards for managing and controlling the driving of said motor.

This connection entails the connection of one or more wires that exit from the stator and must be connected to a corresponding number of wires that arrive from the power supply.

Such connection must have no unwanted contacts or short circuits and must give assurance to operators, both during assembly and during production, that application occurs easily and safely as regards the possibility of accidents.

With this goal, many kinds of connector or connection assembly have been designed and are currently commercially available which substantially have predefined receptacles for the connection terminals that are anchored in various manners to the stator pack.

The evolution of these connectors or connection assemblies, however, has not yet reached its optimum level, since there are still considerable problems in harmonizing them with an automatic or at least semiautomatic manufacturing process.

Moreover, good flexibility in application in relation to the type of motor to which they are applied is sometimes lacking; for example, it is not possible to have in output a connector that is suitable both for electronic boards and for tabs of the "RAST 5" type or optionally other types according to commercial requirements.

Moreover, in relation to application flexibility, connection assemblies are seldom compact.

EP-A-1115191 discloses a connection assembly for the windings of a stator of an electric motor in which an external L-shaped connector for power supply cables has a plurality of female elements that are coupled to complementary male elements connected to the stator windings, each female element being housed into a respective seat which is electrically insulated from adjacent seats.

EP-A-0837542 discloses a connection assembly for the windings of a stator of an electric motor where a plurality of male elements connected to the stator windings are housed in respective receptacles of a box-like body fitted to the electric motor. Such receptacles are arranged in pairs so that one seat of the pair is used to accommodate its male terminal and the other seat is used to provide any electrical bridges. Moreover, EP-A-0837542 discloses a tab whose shape allows insertion of a thermal protection device.

US-A-4585964 discloses a terminal block installed on a stator core and comprising two arms defining respective electrical terminal receptacle for magnetic wire ends. A male terminal of a thermal protector is received in a common receptacle of the terminal block to make contact between the magnetic wires.

The aim of the present invention is to provide a connection assembly, particularly for the stator windings of an electric motor, that solves the drawbacks noted above in known connectors or connection assemblies, particularly ensuring effective and safe connection of the power supply wires or cables to the stator wires.

Within this aim, an object of the present invention is to provide a connection assembly that allows substantially automatic or semiautomatic assembly and ensures, during application, an equally safe and easy application of the connections by the operator.

Another object of the present invention is to provide high flexibility in application in relation both to the type of motor on which said assembly is applied and to the intended use of said motor.

Another object of the present invention is to provide a connection assembly that can be mass-manufactured and can be assembled automatically or semiautomatically.

Another object of the present invention is to provide a connection assembly that can be manufactured at costs that are competitive with respect to assemblies or connectors that have a similar functionality.

Another object of the present invention is to provide a connection assembly, for the stator windings of an electric motor, that can be manufactured with known systems and technologies.

This aim and these and other objects that will become better apparent hereinafter are achieved by a connection assembly, for the stator windings of an electric motor, according to the independent claims 1 and 9.

Further characteristic and advantages of the present invention will become better apparent from the following detailed description of a preferred but nut exclusive embodiment thereof, illustrated by way of nonlimiting example in the accompanying drawings, wherein:
Figure I is a partially sectional side view of an electric motor for a washing machine pump, with a connection assembly according to the invention applied thereto, according to a first embodiment;
Figure 2 is a partially sectional enlarged-scale front view of a portion of the connection assembly shown in Figures 1;
Figure 3 is an enlarged-scale view of a portion of Figure 1, illustrating in particular the connection assembly according to the invention;
Figure 4 is a partial side view, illustrating the connection assembly according to the invention, according to a second embodiment;
Figure 5 is a front view of a male terminal according to the first embodiment of the invention;
Figure 6 is a partially sectional side view of the male terminal of Figure 5;
Figure 7 is a schematic view of electrical connections between male terminals and stator windings as provided in the connection assembly according to the invention;
Figure 8 is a partially sectional enlarged-scale front view of a portion of the connection assembly, applied to an electric motor for a washing machine pump according to a variation of the first embodiment of the invention;
Figure 9 is a partially sectional enlarged-scale side view of a portion of the connection assembly of Figure 8;
Figure 10 is a partially sectional enlarged-scale side view of a portion of the connection assembly according to a variation of the second embodiment of the invention.

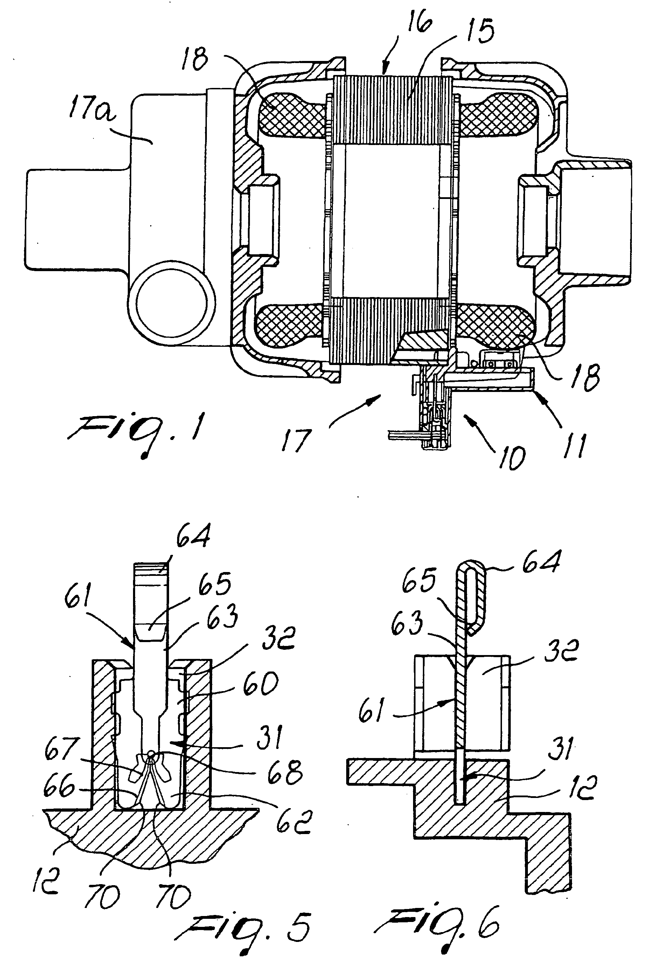

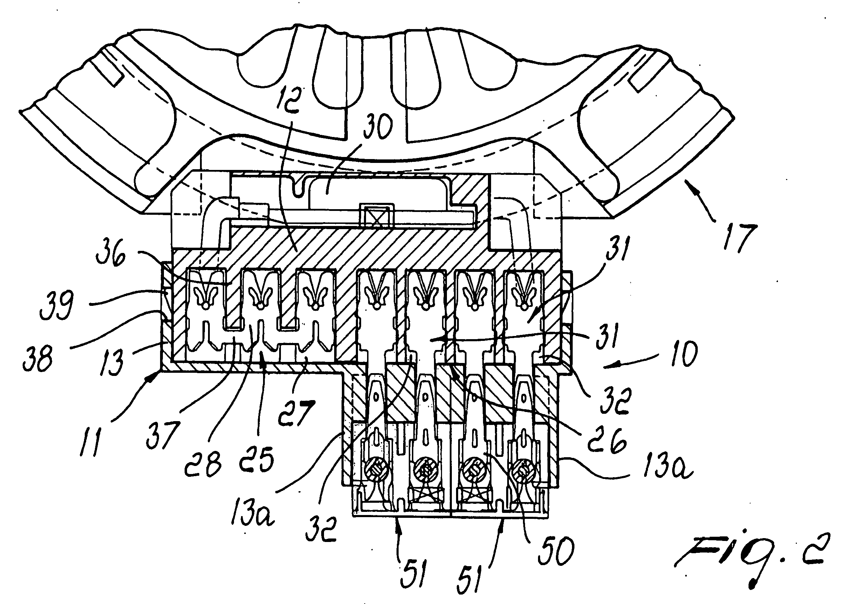

With reference to Figures 1, 2 and 3, a connection assembly, for the stator windings of an electric motor according to the invention, is generally designated by the reference numeral 10.

The connection assembly 10 comprises a box-like body 11, which forms a connector that is composed of a base body 12 and an outer shell 13.

Means (described hereinafter) 14 for anchoring to a lamination pack 15 of a stator body 16 of an electric motor 17 (not shown entirely in Figure 1) protrude from the box-like body 11; the connection assembly is applied to the stator windings 18 of said electric motor (in this embodiment, the electric motor 17 is part of an asynchronous pump for washing machines, the volute of which is designated by the reference numeral 17a).

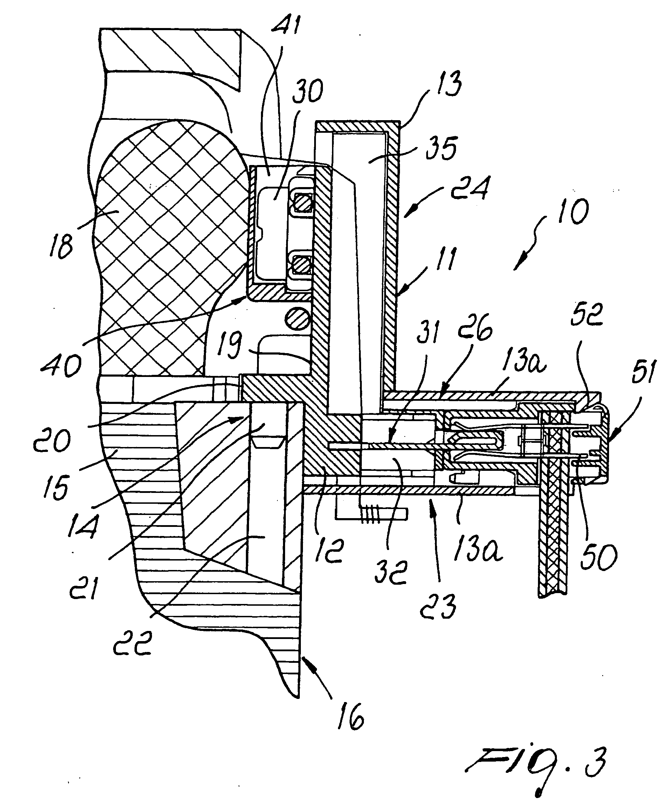

Viewed in lateral cross-section (Figure 3), the box-like body 11 is substantially L-shaped, with a transverse arm 23 that is perpendicular to the lamination pack 15 and a longitudinal arm 24 that is adjacent to the extension of the stator body 16.

A flat ledge 20 protrudes at right angles to the outer surface of the lamination pack 15 from a flat surface 19 that forms the outside of the longitudinal arm of the L-shape that is adjacent to the stator body 16, proximate to the transverse arm 23 of the L-shape, and is designed to rest against the edge of the lamination pack 15.

At least two pins 21 for centering and fixing the connection assembly 10 protrude from the surface of said flat ledge 20 and enter corresponding holes 22 formed in the lamination pack 15.

The pins 21 substantially correspond to the anchoring means 14.

The box-like body 11 forms a first connection section and a second connection section, which are designated by the reference numerals 25 and 26 respectively.

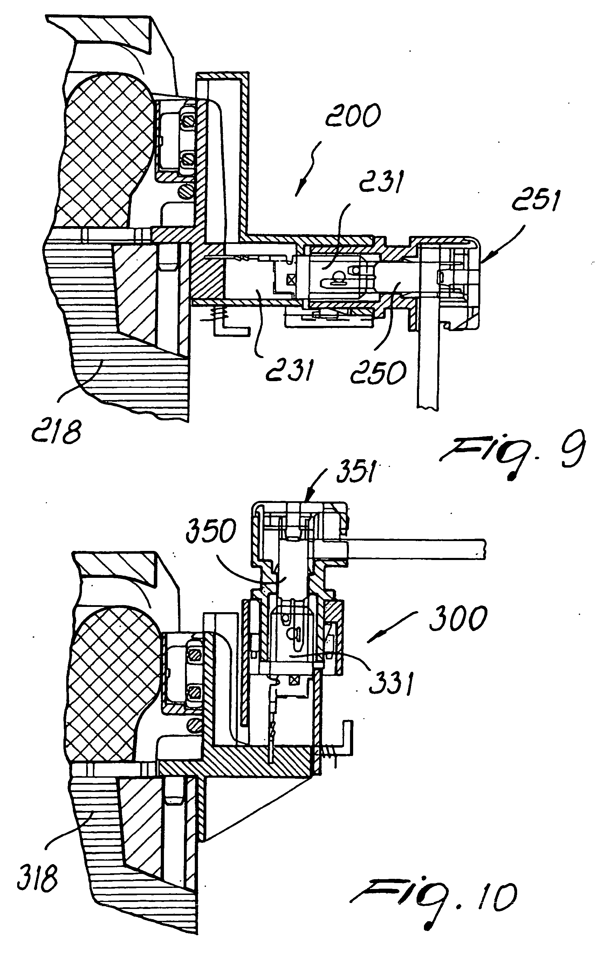

The first connection section 25 in turn forms, particularly on the base body 12, three first receptacles, designated by the reference numeral 27 and adjacent and parallel to each other, inside which there are three terminals 28 of a per se known type that are connected monolithically to each other and act as a bridge between corresponding ends of the stator windings 18, respectively the main winding 18a and the auxiliary winding 18b (as shown in Figure 7), and the end of a cable 29 that is functionally connected to the external power supply and is affected along its extension by a thermal protector 30.

First terminals 31, for example of the male type (hereinafter termed "male terminals") are provided at the opposite ends of the windings 18a and 18b and the cable 29 and are respectively accommodated along the extension of corresponding second receptacles 32 formed in the base body 12, which are mutually adjacent and electrically insulated and substantially constitute the second connection section 26.

The first section 25 and the second section 26 are substantially shaped like a parallelepiped and constitute part of the transverse arm 23 of the L-shape formed by the box-like body 11.

The first and second receptacles 27 and 32 in practice lie at right angles to a plane that is laterally tangent to the lamination pack 15 of the stator body 16.

The receptacles 27 and 32 are open outward in order to allow respectively the insertion of the three bridge terminals 28 and the insertion of the male terminals 31.

The receptacles 27 and 32 further have, toward their bottom, lateral openings (not shown in the figures) for the passage of the electrical windings and cables.

The longitudinal arm 24 of said L-shape forms internally a plurality of channels 35 that are arranged mutually side-by-side and are connected in an upper region to the outside proximate to the windings 18 and in a lower region to respective receptacles 27 and 32.

The windings 18 and the cable 29 pass inside the channels 35 so that they are at least partially protected and insulated with respect to the outside.

The dividing walls 36 between the first receptacles 27 are shorter than the extension of the bridge terminals 28, since they must allow the arrangement of the monolithic portion 37 for connection between the terminals 28.

The channels 35 and the first receptacles 27 are closed in an upper region by the shell 13, which substantially duplicates the L-shape of the connection assembly.

The shell 13 is coupled to the base body 12 by way of its own slots 38, which couple to respective teeth 39 formed on mutually opposite sides of the base body 12.

Moreover, the box-like body 11 comprises a portion 40 that is laterally tangent with respect to the stator windings 18 and is arranged substantially opposite the lamination pack 15 of the stator body 16 with respect to the first and second connection sections 25 and 26.

The portion 40 is directed substantially toward the stator windings 18 from the surface 19 of the longitudinal arm 24 of the L-shape formed by the box-like body.

The portion 40 forms a third receptacle 41 for the thermal protector 30, which in this way is located close to the stator windings 18 and can detect their overheating temperature; in practice, it is adjacent to them, with the sole interposition of the thin wall 42 of the third receptacle 41 that contains the protector.

The male terminals 31 can be coupled to complementary second terminals 50, for example of the female type (hereinafter termed "female terminals"), of a per se known type, which are inserted inside external connection elements 51, such as for example a pair of external connectors, also of a known type, which can be inserted between the walls 13a of the shell 13 that delimit the transverse arm 23 of the L-shape.

The connectors 51 are prevented from uncoupling with respect to the connection assembly, and are therefore locked between the walls 13a, with the aid of a tooth 52, which locks the upper edges of said connectors by way of its undercut portion.

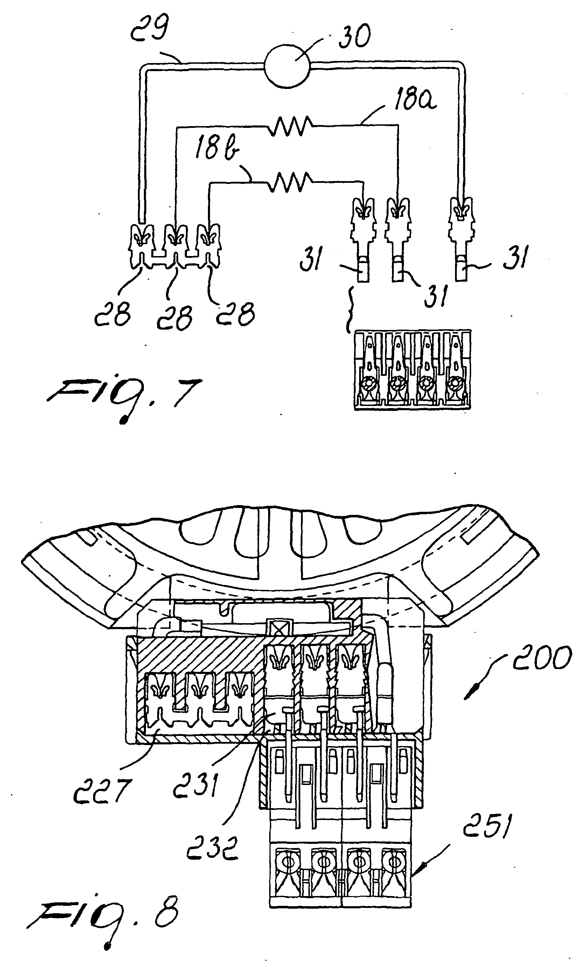

As shown more clearly in Figures 5 and 6, each male terminal 31 is formed by a laminar body 60 provided with an upper part, which is shaped so as to form a laminar tang 61 for insertion and coupling between the wings of the complementary female terminal 50, and with a lower part 62, which is shaped in a known manner for connection to the stator windings 18.

The lower part 62 is provided with mutually opposite wings 66 that are folded onto the plane of arrangement of said terminal with free ends 67 that mutually converge at the axis of the terminal 31 so as to form a self-centering tapered receptacle 68 for a corresponding stator winding 18 or cable 29.

In particular, the wings 66 are shaped at mutually facing edge portions 69 so as to form blades 70 that are suitable to cut upon insertion the insulating sheath of the contained wire.

The tang 61 is formed by a lamina that is constituted by a straight part 63 and by a part 64 that is folded at 180°, the end 65 of which is further folded so as to provide a linear contact with the straight part 63.

Advantageously, the transverse dimensions of the folded part 64 with the straight part 63, shown in Figure 6, is substantially the same as the thickness of an electronic board.

The thickness of the male terminal therefore has a variation in transverse dimensions while maintaining constant the thickness of its extension.

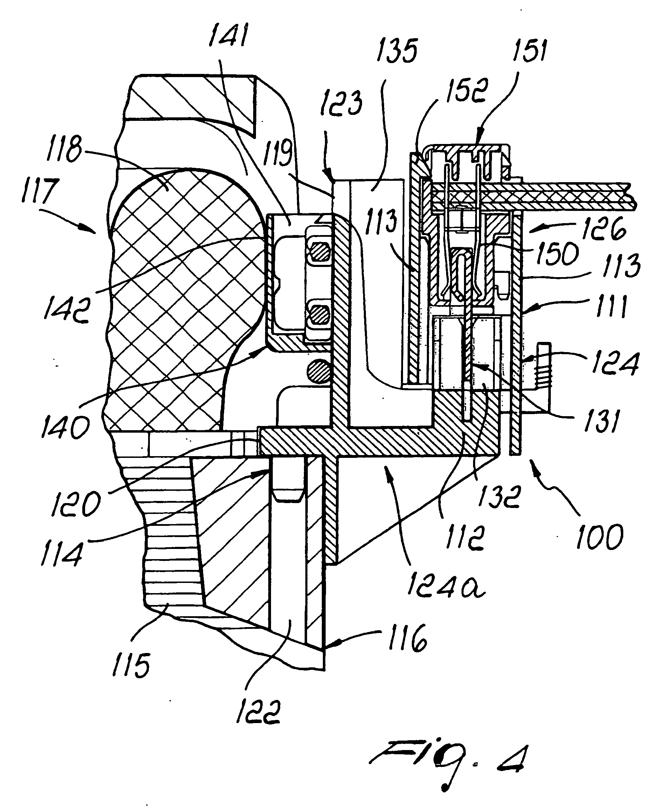

A second embodiment of the invention is shown in Figure 4.

In this embodiment, the connection assembly according to the invention is designated by the reference numeral 100 and comprises a box-like body 111 that forms a connector composed by a base body 112 and an outer shell 113.

Means 114 (described hereinafter) for anchoring to the lamination pack 115 of the stator body 116 of the electric motor 117 (not shown entirely in Figure 1) protrude from the box-like body 111; the connection assembly is applied to the stator windings 118 of said electric motor.

Viewed in lateral cross-section (Figure 4), the box-like body 111 is substantially U-shaped, with a first wing 123 that is parallel and adjacent to the stator 116, a second wing 124 that lies very close to the first wing 123, and a lower connecting portion 124a that is perpendicular to the distribution of the lamination pack 115.

A flat ledge 120 for resting against the edge of the lamination pack 115 protrudes at right angles to the outer surface of the lamination pack 115 from a flat surface 119 that forms the outside of the first wing 123 that is adjacent to the stator body 116, substantially as an extension of the lower connecting portion 124a.

At least two pins 121 for centering and fixing the connection assembly 100 protrude from the surface of the flat ledge 120 and enter corresponding holes 122 formed in the lamination pack 115.

The pins 121 correspond substantially to the anchoring means 114.

The box-like body 11 forms a first connection section (not shown in the figures) and a second connection section, which is designated by the reference numeral 126.

The first connection section is substantially formed like the first connection section 25 of the first illustrated embodiment and is substantially constituted by the same elements (including the same bridge terminals).

Male terminals 131 are provided at the ends of the windings and of the cable on which the thermal protector 130 is arranged; said terminals are respectively accommodated along the extension of corresponding second receptacles 132, which are formed in the base body 112, are mutually adjacent and electrically insulated, and substantially constitute the second connection section 126.

The first and second sections are substantially shaped like parallelepipeds and constitute substantially part of the second wing 124 of the U-shape formed by the box-like body 11.

The second receptacles 132 (and the respective first receptacles not shown in Figure 4) are arranged in practice laterally to the stator body 116 of the electric motor 117 and substantially parallel to the axis of the extension of the stator body 116.

The receptacles 132 (and the respective first receptacles not shown in Figure 4) are open outward in order to allow respectively the insertion of the bridge terminals and the insertion of the male terminals 131.

Said receptacles further have, toward their bottom, lateral openings (not shown in the figures) for the passage of the windings and electrical cables.

The first wing 123 of said U-shape forms internally a plurality of side-by-side channels 135, which are connected, in an upper region, to the outside proximate to the windings 118 and in a lower region to the respective first receptacles (not shown in the figures) and second receptacles 132.

The windings 118 and the cable of the protector 130 pass within the channels 135 so that they are at least partially protected and insulated from the outside.

The channels 135 and the first receptacles (not shown in the figures) are closed in an upper region by the shell 113.

The shell 113 substantially surrounds the second wing 124, coupling to the base body 112 by means of slots with which it is provided and which couple to respective teeth (both not shown in the figures) formed on opposite sides of the base body 112.

In particular, since the shell 113 is parallel and very close to the channels 135, it also acts as a covering for said channels.

The box-like body 111 further comprises a portion 140 that is laterally tangent to the stator windings 118 and is arranged substantially frontally with respect to the extension of said first and second connection sections.

The portion 140 protrudes substantially toward the stator windings 118 from the surface 119 of the first wing 123 of the U-shape formed by the box-like body.

The portion 140 forms a third receptacle 141 for the thermal protector 130, which in this manner is close to the stator windings 118 and can detect their overheating temperature; in practice, it is adjacent thereto, with the sole interposition of the thin wall 142 of the third receptacle 141 for containing the protector.

The male terminals 131 can be coupled to complementary female terminals 150 of a per se known type, which are inserted inside a pair of external connectors 151, also of a known type, that can be inserted between the walls of the shell 113 that delimit the second wing 124 of the U-shape.

The connectors 151 are prevented from uncoupling from the connection assembly, and are therefore locked between said walls of the shell 113, with the aid of a tooth 152, which locks the upper edges of said connectors by means of its undercut portion.

With reference to Figures 8 and 9, a connection assembly according to a variation of the first embodiment of the invention described earlier (designated by the reference numeral 10) is designated by the reference numeral 200.

The connection assembly 200 differs from the previously described assembly substantially because it is possible to apply a different connector, designated by the reference numeral 251, for different male terminals 231 and female terminals 250, which are in any case of a known type.

Accordingly, the internal shapes of the first receptacles 227 and second receptacles 232 are suitable to accommodate the respective terminals.

In particular, the second receptacles 232 are also perpendicular to the extension of the lamination pack 218.

With reference to Figure 10, a connection assembly according to a variation of the second embodiment (designated by the reference numeral 100) of the invention described earlier is designated by the reference numeral 300.

The connection assembly 300 differs from the previously described assembly substantially because it is possible to apply a different connector, designated by the reference numeral 351, for different male terminals 331 and female terminals 350, which are in any case of a known type.

Accordingly, the internal shapes of the first receptacles 327 and second receptacles 332 are suitable to accommodate the respective terminals.

In particular, the second receptacles 332 are also perpendicular to the extension of the lamination pack 318.

In practice it has been found that the invention thus described solves the problems noted in known types of connection assembly for stator windings of electric motors; in particular, the present invention provides a connection assembly, particularly for the stator windings of an electric motor, that is extremely flexible in application and allows, both during production of the electric motor and during connection of said motor to the power supply, connections that are safe in terms of short circuits or damage to components and for the operator.

As regards flexibility, it should be noted that with the present invention it is possible to have in output a connector for electronic boards or for tabs, for example of the RAST 5 type, or optionally other types according to commercial requirements.

Moreover, it should be noted that the connection assembly according to the invention allows high automation in the manufacture of the electric motor and in the manufacture of the assembly, also allowing last-minute changes to the arrangement and setup of the connections.

It should also be noted that the present invention eliminates the internal cables that originate from the windings, thus improving connection times and connection safety.

Further, it should be noted that the connection assembly according to the invention is extremely compact and can be used conveniently if the dimensions required for connection are extremely small and limited in certain preferential directions.

The invention thus conceived is susceptible of numerous modifications and variations within the scope of the appended claims.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A connection assembly, for the stator windings (18) of an electric motor (17), comprising a box-like body (11) from which means (14) for anchoring to the lamination pack (15) of the stator body (16) of the electric motor (17) protrude, said box-like body (11) forming a connector that is composed of a base body (12) and an outer shell (13) and having, in a lateral cross-section, an L-shaped configuration that is formed by a transverse arm (23) that is perpendicular to said lamination pack (15) and a longitudinal arm (24) that is adjacent to the extension of said stator body (16), **characterized in that** said box-like body (11) forms a first connection section (25) and a second connection section (26), said first connection section (25) forming at least one first receptacle (27) for at least one respective bridge terminal (28) for bridging ends of the stator windings (18) to a first end of a cable (29) that is functionally connected to the external power supply and along which a thermal protector (30) is end, said second connections section (26) forming second receptacles (32) for accommodating along their extension respective first terminals (31) which are provided at the opposite ends of said stator windings (18) and of said cable (29), there being a serial connection between said at least one bridge terminal (28) and said first terminals (31) via said cable (29) and said thermal protector (30), said first terminals (31) being associable with complementary second terminals (50) of at least one external connection element (51) that is functionally connected to the external electric power supply, said second receptacles (32) being mutually electrically insulated and being arranged at right angles to a plane that is tangent laterally to the stator body (16) of the electric motor (17), an upper region of said at least one first receptacle (27) being closed by the shell (13) and said second receptacles being delimited by walls (13a) of the shell (13) for receiving said at least one external connections element (51) therebetween, said walls (13a) forming said transverse arm (23) of the L-shape, said box-like body (11) further comprising a portion (40) that is laterally tangent to the stator windings (18) and is arranged opposite with respect to the lamination pack (15) of the stator body (16) and to said first and second connection sections (25, 26) and forms a third receptacle (41) for said thermal protector (30).

2. The connection assembly according to claim 1, **characterized in that** said anchoring means (14) comprise a flat ledge (20) for resting against the edge of said lamination pack (15) that protrudes, proximate to said transverse arm (23) and at right angles to the outer surface of said lamination pack (15), from a surface (19) that forms the outside of said longitudinal arm of said L-shape that is adjacent to said stator body (16), at least two pins (21) for centering and fixing the connection assembly (10) protruding at right angles to said ledge (20) and being insertable in corresponding holes (22) formed in said lamination pack (15).

3. The connection assembly according to one or more of the preceding claims, **characterized in that** said first receptacles (27) and said second receptacles (32) are open outward for the insertion respectively of said bridge terminals (28) and of said first terminals (31), said first and second receptacles (27, 32) further having, toward their bottom, lateral openings for the passage of said stator windings (18) and said at least one cable.

4. The connection assembly according to one or more of the preceding claims, **characterized in that** said longitudinal arm (24) of said L-shape forms internally at least one channel (35) that is connected to the outside in an upper region proximate to said stator windings (18) and in a lower region to the respective first and second receptacles (27, 32), said windings (18) and said at least one cable (29) passing inside said at least one channel (35) so as to be at least partially protected and insulated from the outside.

5. The connection assembly according to one or more of the preceding claims, **characterized in that** said at least one channel (35) is closed in an upper region by said shell (13), which duplicates the L-shape of the connection assembly, said shell (13) being coupled to said base body (12) by means of slots (38) that couple to respective teeth (39) formed on mutually opposite sides of said base body (12).

6. The connection assembly according to one or more of the preceding claims, **characterized in that** said at least one external connection element (51) is prevented from uncoupling from the connection assembly with the aid of at least one tooth (52) in which the undercut portion rests against the upper edge of said at least one external connection element (51), locking it in the extraction direction.

7. The connection assembly according to one or more of the preceding claims, **characterized in that** said portion (40) that is laterally tangent to said stator windings (18) is extended toward said windings from the surface (19) of said longitudinal arm (24) of said L-shape, said protector (30) being adjacent, with the sole interposition of a containment wall (42) for said protector (30) formed by said third receptacle (41).

8. The connection assembly according to one or more of the preceding claims, **characterized in that** there are dividing walls (36) between said first receptacles (27) which are shorter than the extension of said at least one bridge terminal (28).

9. A connection assembly for the stator windings (118) of an electric motor (117), comprizing a box-like body (111) from which means (114) for anchoring to the lamination pack (115) of the stator body (116) of the electric motor (117) protrude, **characterized in that** said box-like body (111) forms a connector that is composed of a base body (112) and an outer shell (113) and has a U-shaped lateral cross-section, formed by a first wing (123) that is parallel and adjacent to said stator (116), by a second wing (124) that is close to said first wing (123), and by a lower connecting portion (124a) that is perpendicular to the distribution of said lamination pack (115), said box-like body (111) forming a first connection section (125) and a second connection section (126), said first connection section (125) forming at least one first receptacle (127) for at least one respective bridge terminal (128) for bridging ends of the stator windings (118) to a first end of a cable (129) that is functionally connected to the external power supply and along which a thermal protector (130) is arranged, said second connection section (126) forming second receptacles (132) for accommodating respective first terminals (131) which are provided at opposite ends of said stator windings (118) and of said cable (129) there being a serial connection between said at least one bridge terminal (129) and said first terminals (131) via said cable (129) and said thermal protector (130), said first terminals (131) being associable with complementary second terminals (150) of at least one external connection element (151) that is functionally connected to the external electric power supply, said second receptacles (132) being mutually electrically insulated, said first receptacles and said second receptacles (132) being arranged laterally to the stator body (116) of the electric motor (117) and parallel to the axis of the extension of said stator body (116), said at least one first receptacle being closed in an upper region by said shell (113) and an upper region of said seconds receptacles (132) being delimited by walls of the shell (113) for receiving said at least one external connections element (151) therebetween, said walls forming said second wing (124) of said U-shape, said box-like body (111) further comprising a portion that is laterally tangent to the stator windings (118), is arranged frontally with respect to the extension of said first connection section and said second connection section (126), and forms a third receptacle (141) for said thermal protector (131).

10. The connection assembly according to claims 9, **characterized in that** said anchoring means (114) comprise a flat ledge (120) for resting against the edge of said lamination pack (115), said ledge protruding, as an extension of said lower connecting portion (124a) and at right angles to the outer surface of said lamination pack (115), from a surface (119) that forms the outside of said first wing (123) of said U-shape that is adjacent to said stator body (116), at least two pins (121) protruding at right angles to said ledge (120) for centering and fixing the connection assembly (100), said pins being insertable in corresponding holes (122) formed in said lamination pack (115).

11. The connection assembly according to one or more of claims 9 to 10, **characterized in that** said first receptacles (127) and said second receptacles (132) are open outward for the insertion of said bridge terminals (128) and of said first terminals (131) respectively, said first and second receptacles (127, 132) further having, toward their bottom, lateral openings for the passage of said stator windings (118) and said at least one cable.

12. The connection assembly according to one or more of claims 9 to 11, chamtmized in that said first wing (123) of said U-shape forms internally at least one channel (135) that is connected to the outside in an upper region proximate to said windings (118) and to respective first and second receptacles (127,132) in a lower region, said windings (118) and said at least one cable (129) passing within said at least one channel (135) so that they are at least partially protected and insulated from the outside.

13. The connection assembly according to one or more of claims 10 to 12, **characterized in that** said at least one channel (135) is closed in an upper region by said shell (113), which surrounds said second wing (124) and further couples to said base body (112) by means of slots with which it is provided and which couple to respective teeth formed on mutually opposite sides of said base body (112).

14. The connection assembly according to one or more of claims 9 to 13, **characterized in that** said at least one external connection element (151) is prevented from uncoupling with respect to the connection assembly with the aid of at least one tooth (152) in which the undercut portion rests against the upper edge of said at least one external connection element (151), locking it in the extraction direction.

15. The connection assembly according to one or more of claims 9 to 14, **characterized in that** said portion (140) that is laterally tangent to said stator windings (118) is extended toward said windings from the surface (119) of said first wing (123) of said U-shape, said protector (130) being adjacent, with the sole interposition of a wall (142) for containing said protector (130), said wall being formed by said third receptacle (141).

16. The connection assembly according to one or more of claims 9 to 15. **characterized in that** there are dividing walls (139) between said first receptacles which are shorter than the extension of said at least one bridge terminal (128).

17. The connection assembly according to one or more of the preceding claims, **characterized in that** said first terminals (31, 131, 231, 331) are of the male type, and said second terminals (50, 150, 250, 350) are of the female type.

## Patentansprüche

1. Verbindungsanordnung für die Statorwicklungen (18) eines Elektromotors (17) umfassend einen kastenartigen Körper (11), von dem Mittel (14) zum Verankern eines Laminationspacks (15) des Statorkörpers (16) des Elektromotors (17) hervorstehen, wobei der kastenartige Körper (11) eine Verbindungseinrichtung bildet, die aus einem Basiskörper (12) und einer Außenhülle (13) gebildet ist und in seitlichem Querschnitt eine L-förmige Konfiguration aufweist, die durch einen Querarm (23) gebildet ist, der zum Laminationspack (15) senkrecht ist, und einen Längsärm (24), der neben der Ausdehnung des Statorkörpers (16) liegt, **dadurch gekennzeichnet, dass** der kastenartige Körper (11) einen ersten Verbindungsbereich (25) und einen zweiten Verbindungsbereich (26) bildet, wobei der erste Verbindungsbereich (25) mindestens eine erste Aufnahme (27) für mindestens einen entsprechenden Brückenanschluss (28) bildet zum Überbrücken von Enden der Statorwicklungen (18) mit einem ersten Ende eines Kabels (29), das funktional mit der externen Energiezufuhr verbunden ist, und entlang der eine thermische Schutzeinrichtung (30) angeordnet ist, wobei der zweite Verbindungsbereich (26) zweite Aufnahmen (32) zum Aufnehmen entsprechender erster Anschlüsse (31) entlang ihrer Ausdehnung bildet, die an gegenüberliegenden Enden der Statorwicklungen (18) und dem Kabel (29) vorgesehen sind, wobei eine serielle Verbindung zwischen dem mindestens einen Brückenanschluss (28) und den ersten Anschlüssen (31) über das Kabel (29) und die thermische Schutzeinrichtung (30) ausgebildet ist, wobei die ersten Anschlüsse (31) komplementären zweiten Anschlüssen (50) mindestens eines externen Verbindungselements (51) zugeordnet werden können, das funktional mit der externen Energiezufuhr verbunden ist, wobei die zweiten Aufnahmen (32) gegeneinander elektrisch isoliert sind und im rechten Winkel zu einer Ebene angeordnet sind, die seitlich den Statorkörper (16) des Elektromotors (17) tangiert, wobei ein oberer Bereich der mindestens einen ersten Aufnahme (27) durch die Außenhülle (13) geschlossen ist und die zweiten Aufnahmen durch Wände (13a) der Außenhülle (13) begrenzt sind, um das mindestens eine externe Verbindungselement (51) dazwischen aufzunehmen, wobei die Wände (13a) den Querarm (23) der L-Form bilden, wobei der kastenartige Körper (11) ferner einen Teil (40) umfasst, der die Statorwicklungen (18) seitlich tangiert und zum Laminationspack (15) des Statorkörpers (16) und zu den ersten und zweiten Verbindungsbereichen (25, 26) gegenüberliegend angeordnet ist und eine dritte Aufnahme (41) für die thermische Schutzeinrichtung (30) bildet.

2. Verbindungsanordnung nach Anspruch 1, **dadurch gekennzeichnet, dass** die Verankerungsmittel (14) eine flache Leiste (20) umfassen, die gegen die Kante des Laminationspacks (15) anliegt, die nahe dem Querarm (23) und im rechten Winkel zur Außenoberfläche des Laminationspack (15) von einer Oberfläche (19) hervorsteht, die die Außenseite des Längsarms der L-Form bildet, der neben dem Statorkörper (16) liegt, wobei mindestens zwei Stifte (21) zum Zentrieren und Befestigen der Verbindungsanordnung (10) im rechten Winkel zur Leiste (20) hervorstehen und in entsprechende Bohrungen (22) einführbar sind, die im Laminationspack (15) ausgebildet sind.

3. Verbindungsanordnung nach einem oder mehreren der vorhergehenden Ansprüche, **dadurch gekennzeichnet, dass** die ersten Aufnahmen (27) und die zweiten Aufnahmen (32) nach außen offen sind zum entsprechenden Einsetzen der Brückenanschlüsse (28) und der ersten Anschlüsse (31), wobei die ersten und zweiten Aufnahmen (27, 32) ferner zu ihrer Unterseite seitliche Öffnungen für den Durchtritt der Statorwicklungen (18) und des mindestens einen Kabels aufweisen.

4. Verbindungsanordnung nach einem oder mehreren der vorhergehenden Ansprüche, **dadurch gekennzeichnet, dass** der Längsarm (24) der L-Form innen mindestens einen Kanal (35) bildet, der in einem oberen Bereich nahe den Statorwicklungen (18) zur Außenseite und in einem unteren Bereich mit entsprechenden Aufnahmen (27, 32) verbunden ist, wobei die Wicklungen (18) und das mindestens eine Kabel (29) in dem mindestens einen Kanal (35) verlaufen, so dass sie mindestens teilweise gegen die Außenumgebung geschützt und isoliert sind.

5. Verbindungsanordnung nach einem oder mehreren der vorhergehenden Ansprüche, **dadurch gekennzeichnet, dass** der mindestens eine Kanal (35) in einem oberen Bereich durch die Außenhülle (13) geschlossen ist, die die L-Form der Verbindungsanordnung wiederholt, wobei die Außenhülle (13) mit dem Basiskörper (12) mittels Schlitzen (38) gekoppelt ist, die mit entsprechenden Zähnen (39) koppeln, die auf zueinander gegenüberliegenden Seiten des Basiskörpers (12) ausgebildet sind.

6. Verbindungsanordnung nach einem oder mehreren der vorhergehenden Ansprüche, **dadurch gekennzeichnet, dass** das mindestens eine externe Verbindungselement (51) mit Hilfe mindestens eines Zahns (52) daran gehindert ist, sich von der Verbindungsanordnung zu lösen, bei dem der Unterschnittteil gegen die Oberkante des mindestens einen externen Verbindungselements (51) anliegt, so dass es in Abzugsrichtung festgelegt ist.

7. Verbindungsanordnung nach einem oder mehreren der vorhergehenden Ansprüche, **dadurch gekennzeichnet, dass** der Teil (40), der die Statorwicklungen (18) seitlich tangiert, sich zu den Wicklungen von der Oberfläche (19) des Längsarms (24) der L-Form erstreckt, wobei die Schutzeinrichtung (30) benachbart ist, wobei nur eine Umfassungswand (42) für die Schutzeinrichtung (30) gebildet durch die dritte Aufnahme (41) dazwischen gesetzt ist.

8. Verbindungsanordnung nach einem oder mehreren der vorhergehenden Ansprüche, **dadurch gekennzeichnet, dass** Teilungswände (36) zwischen den ersten Aufnahmen (27) vorhanden sind, die kürzer sind als die Ausdehnung des mindestens einen Brückenanschlusses (28).

9. Verbindungsanordnung für die Statorwicklungen (118) eines Elektromotors (117) umfassend einen kastenartigen Körper (111), von dem Mittel (114) zum Verankern des Laminationspacks (115) des Statorkörpers (116) des Elektromotors (117) hervorstehen, **dadurch gekennzeichnet, dass** der kastenartige Körper (111) eine Verbindungseinrichtung bildet, die aus einem Basiskörper (112) und einer Außenhülle (113) gebildet ist und einen U-förmigen seitlichen Querschnitt aufweist, gebildet durch einen ersten Flügel (123), der parallel und benachbart zum Stator (116) ist, durch einen zweiten Flügel (124), der nahe dem ersten Flügel (123) ist und durch einen unteren Verbindungsteil (124a), der zum Verlauf des Laminationspacks (115) senkrecht ist, wobei der kastenartige Körper (111) einen ersten Verbindungsbereich (125) und einen zweiten Verbindungsbereich (126) bildet, wobei der erste Verbindungsbereich (125) mindestens eine erste Aufnahme (127) für mindestens einen entsprechenden Brückenanschluss (128) bildet zum Überbrücken von Enden der Statorwicklungen (118) mit einem ersten Ende eines Kabels (129), das funktional mit der externen Energiezufuhr verbunden ist, und entlang der eine thermische Schutzeinrichtung (130) angeordnet ist, wobei der zweite Verbindungsbereich (126) zweite Aufnahmen (132) zum Aufnehmen entsprechender erster Anschlüsse (131) bildet, die an gegenüberliegenden Enden der Statorwicklungen (118) und dem Kabel (129) vorgesehen sind, wobei eine serielle Verbindung zwischen dem mindestens einen Brückenanschluss (128) und den ersten Anschlüssen (131) über das Kabel (129) und die thermische Schutzeinrichtung (130) ausgebildet ist, wobei die ersten Anschlüsse (131) komplementären zweiten Anschlüssen (150) mindestens eines externen Verbindungselements (151) zugeordnet werden können, das funktional mit der externen Energiezufuhr verbunden ist, wobei die zweiten Aufnahmen (132) gegeneinander elektrisch isoliert sind, wobei die ersten Aufnahmen und die zweiten Aufnahmen (132) seitlich zum Statorkörper (116) des Elektromotors (117) angeordnet sind und parallel zur Ausdehnungsachse des Statorkörpers (116), wobei die mindestens eine erste Aufnahme in einem oberen Bereich durch die Außenhülle (113) geschlossen ist und ein oberer Bereich der zweiten Aufnahmen (132) durch Wände der Außenhülle (113) begrenzt sind, um das mindestens eine externe Verbindungselement (151) dazwischen aufzunehmen, wobei die Wände den zweiten Flügel (124) der U-Form bilden, wobei der kastenartige Körper (111) ferner einen Teil umfasst, der die Statorwicklungen (118) seitlich tangiert und in Bezug auf die Ausdehnung des ersten Verbindungsbereichs und des zweiten Verbindungsbereichs (126) frontal ist und eine dritte Aufnahme (141) für die thermische Schutzeinrichtung (131) bildet.

10. Verbindungsanordnung nach Anspruch 9, **dadurch gekennzeichnet, dass** die Verankerungsmittel (114) eine flache Leiste (120) umfassen, die gegen die Kante des Laminationspacks (115) anliegt, wobei die Leiste als Verlängerung des unteren Verbindungsteils (124a) und im rechten Winkel zur Außenfläche des Laminationspacks (115) von einer Oberfläche (119) hervorsteht, die die Außenseite des ersten Flügels (123) der U-Form bildet, die zum Statorkörper (116) benachbart ist, wobei mindestens zwei Stifte (121) im rechten Winkel zur Leiste (120) hervorstehen zum Zentrieren und Befestigen der Verbindungsanordnung (100), wobei die Stifte in entsprechende Bohrungen (122) einführbar sind, die im Laminationspack (115) ausgebildet sind.

11. Verbindungsanordnung nach einem oder mehreren der Ansprüche 9 bis 10, **dadurch gekennzeichnet, dass** die ersten Aufnahmen (127) und die zweiten Aufnahmen (132) nach außen offen sind zum entsprechenden Einsetzen der Brückenanschlüsse (128) und der ersten Anschlüsse (131), wobei die ersten und zweiten Aufnahmen (127, 132) ferner zu ihrer Unterseite seitliche Öffnungen für den Durchtritt der Statorwicklungen (118) und des mindestens einen Kabels aufweisen.

12. Verbindungsanordnung nach einem oder mehreren der Ansprüche 9 bis 11, **dadurch gekennzeichnet, dass** der erste Flügel (123) der U-Form innen mindestens einen Kanal (135) bildet, der in einem oberen Bereich nahe den Statorwicklungen (118) zur Außenseite und in einem unteren Bereich mit entsprechenden ersten und zweiten Aufnahmen (127, 132) verbunden ist, wobei die Wicklungen (118) und das mindestens eine Kabel (129) in dem mindestens einen Kanal (135) verlaufen, so dass sie mindestens teilweise gegen die Außenumgebung geschützt und isoliert sind.

13. Verbindungsanordnung nach einem oder mehreren der Ansprüche 10 bis 12, **dadurch gekennzeichnet, dass** der mindestens eine Kanal (135) in einem oberen Bereich durch die Außenhülle (113) geschlossen ist, die den zweiten Flügel (124) umgibt und ferner mit dem Basiskörper (112) mittels Schlitzen gekoppelt ist, mit denen er versehen ist und die mit entsprechenden Zähnen koppeln, die auf zueinander gegenüberliegenden Seiten des Basiskörpers (112) ausgebildet sind.

14. Verbindungsanordnung nach einem oder mehreren der Ansprüche 9 bis 13, **dadurch gekennzeichnet, dass** das mindestens eine externe Verbindungselement (151) mit Hilfe mindestens eines Zahns (152) daran gehindert ist, sich von der Verbindungsanordnung zu lösen, bei dem der Unterschnittteil gegen die Oberkante des mindestens einen externen Verbindungselements (151) anliegt, so dass es in Abzugsrichtung festgelegt ist.

15. Verbindungsanordnung nach einem oder mehreren der Ansprüche 9 bis 14, **dadurch gekennzeichnet, dass** der Teil (140), der die Statorwicklungen (118) seitlich tangiert, sich zu den Wicklungen von der Oberfläche (119) des ersten Flügels (123) der U-Form erstreckt, wobei die Schutzeinrichtung (130) benachbart ist, wobei nur eine Wand (142), die die Schutzeinrichtung (130) enthält, dazwischen gesetzt ist, wobei die Wand durch die dritte Aufnahme (141) gebildet ist.

16. Verbindungsanordnung nach einem oder mehreren der Ansprüche 9 bis 15, **dadurch gekennzeichnet, dass** Teilungswände (139) zwischen den ersten Aufnahmen vorhanden sind, die kürzer sind als die Ausdehnung des mindestens einen Brückenanschlusses (128).

17. Verbindungsanordnung nach einem oder mehreren der vorhergehenden Ansprüche, **dadurch gekennzeichnet, dass** die ersten Anschlüsse (31, 131, 231, 331) vom männlichen Typ sind und die zweiten Anschlüsse (50, 150, 250, 350) vom weiblichen Typ sind.

## Revendications

1. Ensemble de connexion pour les enroulements de stator (18) d'un moteur électrique (17), comportant un corps similaire à un boîtier (11) à partir duquel des moyens (14) d'ancrage sur le bloc de lamelles (15) du corps de stator (16) du moteur électrique (17) font saillie, ledit corps similaire à un boîtier (11) formant un connecteur qui est constitué d'un corps de base (12) et d'une enveloppe extérieure (13), et ayant en coupe transversale latérale une configuration en forme de L qui est formée par un bras transversal (23) qui est perpendiculaire au bloc de lamelles (15) et un bras longitudinal (24) qui est adjacent au prolongement dudit corps de stator (16), **caractérisé en ce que** ledit corps similaire à un boîtier (11) forme un premier tronçon de connexion (25) et un second tronçon de connexion (26), ledit premier tronçon de connexion (25) formant au moins un premier logement (27) pour au moins une borne de pont respective (28) pour relier en pont des extrémités des enroulements de stator (18) à une première extrémité d'un câble (29) qui est connecté de manière fonctionnelle à l'alimentation électrique externe et le long de laquelle un protecteur thermique (30) est agencé, ledit second tronçon de connexion (26) formant des deuxièmes logements (32) pour recevoir le long de leur prolongement des premières bornes respectives (31) qui sont agencées aux extrémités opposées desdits enroulements de stator (18) et dudit câble (29), une connexion en série se trouvant entre ladite au moins une borne de pont (28) et lesdites premières bornes (31) via ledit câble (29) et ledit protecteur thermique (30), lesdites premières bornes (31) pouvant être associées à des secondes bornes complémentaires (50) d'au moins un élément de connexion externe (51) qui est connecté de manière fonctionnelle à l'alimentation électrique externe, lesdits seconds logements (32) étant mutuellement isolés électriquement, et étant agencés perpendiculairement à un plan qui est tangent latéralement au corps de stator (16) du moteur électrique (17), une zone supérieure dudit au moins un premier logement (27) étant fermée par l'enveloppe (13), et lesdits seconds logements étant délimités par des parois (13a) de l'enveloppe (13) pour recevoir ledit au moins un élément de connexion externe (51) entre celles-ci, lesdites parois (13a) formant ledit bras transversal (23) de la forme en L, ledit corps similaire à un boîtier (11) comportant en outre une partie (40) qui est latéralement tangente aux enroulements de stator (18), et qui est agencée à l'opposé du bloc de lamelles (15) du corps de stator (16) et desdits premier et second tronçons de connexion (25, 26), et qui forme un troisième logement (41) pour ledit protecteur thermique (30).

2. Ensemble de connexion selon la revendication 1, **caractérisé en ce que** lesdits moyens d'ancrage (14) comportent un rebord plat (20) pour appui contre le bord dudit bloc de lamelles (15) faisant saillie, à proximité dudit bras transversal (23) et perpendiculairement à la surface extérieure dudit bloc de lamelles (15), à partir d'une surface (19) qui forme l'extérieur dudit bras longitudinal de ladite forme en L qui est adjacent audit corps de stator (16), au moins deux broches (21) pour centrer et fixer l'ensemble de connexion (10) faisant saillie perpendiculairement audit rebord (20) et pouvant être insérées dans des trous correspondants (22) formés dans ledit bloc de lamelles (15).

3. Ensemble de connexion selon l'une quelconque des revendications précédentes, **caractérisé en ce que** lesdits premiers logements (27) et lesdits seconds logements (32) sont ouverts vers l'extérieur pour l'insertion respectivement desdites bornes de pont (28) et desdites premières bornes (31), lesdits premiers et seconds logements (27, 32) ayant de plus, vers leur fond, des ouvertures latérales pour le passage desdits enroulements de stator (18) et dudit au moins un câble.

4. Ensemble de connexion selon l'une quelconque des revendications précédentes, **caractérisé en ce que** ledit bras longitudinal (24) de ladite forme en L forme intérieurement au moins un canal (35) qui est connecté à l'extérieur dans une zone supérieure située à proximité desdits enroulements de stator (18) et dans une zone inférieure aux premiers et seconds logements respectifs (27, 32), lesdits enroulements (18) et ledit au moins un câble (29) passant à l'intérieur dudit au moins un canal (35) de manière à être au moins partiellement protégés et isolés de l'extérieur.

5. Ensemble de connexion selon l'une quelconque des revendications précédentes, **caractérisé en ce que** ledit au moins un canal (35) est fermé dans une zone supérieure par ladite enveloppe (13), qui reproduit la forme en L de l'ensemble de connexion, ladite enveloppe (13) étant reliée audit corps de base (12) par l'intermédiaire de fentes (38) qui sont couplées à des dents respectives (39) formées sur des côtés mutuellement opposés dudit corps de base (12).

6. Ensemble de connexion selon l'une quelconque des revendications précédentes, **caractérisé en ce que** ledit au moins un élément de connexion externe (51) est empêché de se désaccoupler de l'ensemble de connexion à l'aide d'au moins une dent (52) dans laquelle la partie entaillée s'appuie contre le bord supérieur dudit au moins un élément de connexion externe (51), en le verrouillant dans la direction d'extraction.

7. Ensemble de connexion selon l'une quelconque des revendications précédentes, **caractérisé en ce que** ladite partie (40) qui est latéralement tangente auxdits enroulements de stator (18) est prolongée vers lesdits enroulements à partir de la surface (19) dudit bras longitudinal (24) de ladite forme en L, ledit protecteur (30) étant adjacent, avec la seule interposition d'une paroi de confinement (42) dudit protecteur (30) formée par ledit troisième logement (41).

8. Ensemble de connexion selon l'une quelconque des revendications précédentes, **caractérisé en ce qu'**il y a des parois de séparation (36) entre lesdits premiers logements (27) qui sont plus courtes que le prolongement de ladite au moins une borne de pont (28).

9. Ensemble de connexion pour les enroulements de stator (118) d'un moteur électrique (117), comportant un corps similaire à un boîtier (111) à partir duquel des moyens (114) pour ancrage sur le bloc de lamelles (115) du corps de stator (116) du moteur électrique (117) font saillie, **caractérisé en ce que** ledit corps similaire à un boîtier (111) forme un connecteur qui est constitué d'un corps de base (112) et d'une enveloppe extérieure (113), et a en coupe transversale latérale une configuration en forme de U, formée par une première aile (123) qui est parallèle et adjacente audit stator (116), par une seconde aile (124) qui est proche de ladite première aile (123), et par une partie de connexion inférieure (124a) qui est perpendiculaire à la distribution dudit bloc de lamelles (115), ledit corps similaire à un boîtier (111) formant un premier tronçon de connexion (125) et un second tronçon de connexion (126), ledit premier tronçon de connexion (125) formant au moins un premier logement (127) pour au moins une borne de pont respective (128) pour relier par pont des extrémités des enroulements de stator (118) à une première extrémité d'un câble (129) qui est connecté de manière fonctionnelle à l'alimentation électrique externe et le long de laquelle un protecteur thermique (130) est agencé, ledit second tronçon de connexion (126) formant des deuxièmes logements (132) pour recevoir des premières bornes respectives (131) qui sont agencées aux extrémités opposées desdits enroulements de stator (118) et dudit câble (129), une connexion en série se trouvant entre ladite au moins une borne de pont (128) et lesdites premières bornes (131) via ledit câble (129) et ledit protecteur thermique (130), lesdites premières bornes (131) pouvant être associées à des secondes bornes complémentaires (150) d'au moins un élément de connexion externe (151) qui est connecté de manière fonctionnelle à l'alimentation en courant électrique externe, lesdits deuxièmes logements (132) étant mutuellement isolés électriquement, lesdits premiers logements et lesdits deuxièmes logements (132) étant agencés latéralement par rapport au corps de stator (116) du moteur électrique (117) et parallèlement à l'axe du prolongement dudit corps de stator (116), ledit au moins un premier logement étant fermé dans une zone supérieure par ladite enveloppe (113), et une zone supérieure desdits deuxièmes logements étant délimitée par des parois de l'enveloppe (113) pour recevoir ledit au moins un élément de connexion externe (151) entre celles-ci, lesdites parois formant ladite seconde aile (124) de ladite forme en U, ledit corps similaire à un boîtier (111) comportant en outre une partie qui est latéralement tangente aux enroulements de stator (118), qui est agencée de manière frontale par rapport au prolongement dudit premier tronçon de connexion et dudit second tronçon de connexion (126), et forme un troisième logement (141) pour ledit protecteur thermique.(131).

10. Ensemble de connexion selon la revendication 9, **caractérisé en ce que** lesdits moyens d'ancrage (114) comportent un rebord plat (120) pour appui contre le bord dudit bloc de lamelles (115), ledit rebord faisant saillie, sous la forme d'un prolongement de ladite partie de connexion inférieure (124a) et perpendiculairement à la surface extérieure dudit bloc de lamelles (115) à partir d'une surface (119) qui forme l'extérieur de ladite première aile (123) de ladite forme en U qui est adjacente audit corps de stator (116), au moins deux broches (121) faisant saillie perpendiculairement audit rebord (120) pour centrer et fixer l'ensemble de connexion (100), lesdites broche pouvant être insérées dans des trous correspondants (122) formés dans ledit bloc de lamelles (115).

11. Ensemble de connexion selon la revendication 9 ou 10, **caractérisé en ce que** lesdits premiers logements (127) et lesdits deuxièmes logements (132) sont ouverts vers l'extérieur pour l'insertion desdites bornes de pont (128) et desdites premières bornes (131), respectivement, lesdits premiers et deuxièmes logements (127, 132) ayant en outre, vers leurs fond, des ouvertures latérales pour le passage desdits enroulements de stator (118) et dudit au moins un câble.

12. Ensemble de connexion selon l'une quelconque des revendications 9 à 11, **caractérisé en ce que** ladite première aile (123) de ladite forme en U forme intérieurement au moins un canal (135) qui est relié à l'extérieur dans une zone supérieure située à proximité desdits enroulements (118) et aux premiers et deuxièmes logements respectifs (127, 132) dans une zone inférieure, lesdits enroulements (118) et ledit au moins un câble (129) passant dans ledit au moins un canal (135) de sorte qu'ils sont au moins partiellement protégés et isolés de l'extérieur.

13. Ensemble de connexion selon l'une quelconque des revendications 10 à 12, **caractérisé en ce que** ledit au moins un canal (135) est fermé dans une zone supérieure par ladite enveloppe (113), qui entoure ladite seconde aile (124) et s'accouple en outre audit corps de base (112) par l'intermédiaire de fentes dont elle est munie et qui s'apparient à des dents respectives formées sur des côté mutuellement opposés dudit corps de base (112).

14. Ensemble de connexion selon l'une quelconque des revendications 9 à 13, **caractérisé en ce que** ledit au moins un élément de connexion externe (151) est empêché de se désaccoupler par rapport à l'élément de connexion à l'aide d'au moins une dent (152) dans laquelle la partie entaillée s'appuie contre le bord supérieur dudit au moins un élément de connexion externe (151), en le verrouillant dans la direction d'extraction.

15. Ensemble de connexion selon l'une quelconque des revendications 9 à 14, **caractérisé en ce que** ladite partie (140) qui est latéralement tangente auxdits enroulements de stator (118) est prolongée vers lesdits enroulements à partir de la surface (119) de ladite première aile (123) de ladite forme en U, ledit protecteur (130) étant adjacent, avec la seule interposition d'une paroi (142) pour contenir ledit protecteur (130), ladite paroi étant formée par le ledit troisième logement (141).

16. Ensemble de connexion selon l'une quelconque des revendications 9 à 15, **caractérisé en ce qu'**il y a des parois de séparation (139) entre lesdits premiers logements qui sont plus courtes que le prolongement de ladite au moins une borne de pont (128).

17. Ensemble de connexion selon l'une quelconque des revendications précédentes, **caractérisé en ce que** lesdites premières bornes (31, 131, 231, 331) sont du type mâle, et lesdites secondes bornes (50, 150, 250, 350) sont du type femelle.
